# EUROPÄISCHE PATENTANMELDUNG

(11) **EP 3 379 069 A1**
(43) Veröffentlichungstag der Anmeldung: **26.09.2018**
(21) Anmeldenummer: 18160839.9
(22) Anmeldetag: 09.03.2018
(51) Int. Cl.: F02M 26/30, F02M 26/12, F02M 26/13, F01N 3/021, F01N 13/00

(54) **VERBRENNUNGSMOTOR UND ABGASNACHBEHANDLUNGSSYSTEM FÜR EINEN VERBRENNUNGSMOTOR**

(30) Priorität: 23.03.2017 DE 102017204897
(71) Anmelder: VOLKSWAGEN AKTIENGESELLSCHAFT, 38440 Wolfsburg (DE)
(72) Erfinder: Car, Onur Ulas, 10115 Berlin (DE); Schlothauer, Janet, 38486 Klötze (DE)

(57) **Zusammenfassung**

Die Erfindung betrifft einen Verbrennungsmotor, welcher mit seiner Einlassseite mit einem Ansaugtrakt und mit seiner Auslassseite mit einem Abgassystem verbunden ist. Das Abgassystem weist einen motornahen Katalysator, insbesondere einen Oxidationskatalysator und einen unmittelbar stromabwärts des motornahen Katalysators angeordneten Partikelfilter auf. Eine Niederdruck-Abgasrückführung verbindet den Abgaskanal unmittelbar stromabwärts des Partikelfilters mit dem Ansaugtrakt. Dabei ist in der Niederdruck-Abgasrückführung ein Abgas-Rückführungs-Kühler vorgesehen, welcher räumlich entkoppelt von der heißen Auslassseite an einer um 90° gedrehten Seite des Verbrennungsmotors angeordnet ist.

Die Erfindung betrifft ferner eine Abgasnachbehandlungsvorrichtung für einen solchen Verbrennungsmotor. Es ist vorgesehen, dass der Niederdruck-Abgasrückführungs-Kühler an einer Stirnseite des Motorblocks des Verbrennungsmotors und somit 90° versetzt und beabstandet von dem Abgaskrümmer angeordnet ist.

## Beschreibung

Die Erfindung betrifft einen Verbrennungsmotor mit einem Abgasnachbehandlungssystem sowie ein Abgasnachbehandlungssystem für einen Verbrennungsmotor gemäß dem Oberbegriff der unabhängigen Ansprüche.

Die aktuelle und eine zukünftig immer schärfer werdende Abgasgesetzgebung stellen hohe Anforderungen an die motorischen Rohemissionen und die Abgasnachbehandlung von Verbrennungsmotoren. Dabei stellen die Forderungen nach einem weiter sinkenden Verbrauch und die weitere Verschärfung der Abgasnormen hinsichtlich der zulässigen Stickoxid-Emissionen eine Herausforderung für die Motorenentwickler dar. Bei Ottomotoren erfolgt die Abgasreinigung in bekannter Weise über einen Drei-Wege-Katalysator, sowie dem Drei-Wege-Katalysator vor- und nachgeschaltete weitere Katalysatoren. Bei Dieselmotoren finden aktuell Abgasnachbehandlungssysteme Verwendung, welche einen Oxidationskatalysator oder NOx-Speicherkatalysator, einen Katalysator zur selektiven katalytischen Reduktion von Stickoxiden (SCR-Katalysator) sowie einen Partikelfilter zur Abscheidung von Rußpartikeln und gegebenenfalls weitere Katalysatoren aufweisen. Als Reduktionsmittel wird dabei bevorzugt Ammoniak verwendet. Weil der Umgang mit reinem Ammoniak aufwendig ist, wird bei Fahrzeugen üblicherweise eine synthetische, wässrige Harnstofflösung verwendet, die in einer dem SCR-Katalysator vorgeschalteten Mischeinrichtung mit dem heißen Abgasstrom vermischt wird. Durch diese Vermischung wird die wässrige Harnstofflösung erhitzt, wobei die wässrige Harnstofflösung Ammoniak im Abgaskanal freisetzt. Eine handelsübliche, wässrige Harnstofflösung setzt sind im Allgemeinen aus 32,5% Harnstoff und 67,5% Wasser zusammen.

Um nach einem Kaltstart des Verbrennungsmotors die Abgasnachbehandlungskomponenten möglichst schnell auf die benötigte Betriebstemperatur zu bringen, ist eine möglichst motornahe Anordnung der Abgasnachbehandlungskomponenten wünschenswert. Dies ist jedoch nicht immer möglich, da der Bauraum begrenzt ist. Daher werden der SCR-Katalysator und/oder der Rußpartikelfilter oftmals in einer motorfernen Unterbodenlage eines Kraftfahrzeuges angeordnet. Es sind motornahe SCR-Systeme bekannt, bei denen ein SCR-Katalysator und ein Rußpartikelfilter über einen Trichter verbunden sind. Durch die Trichtergeometrie wird versucht, den Gegendruck im Abgaskanal zu reduzieren, wodurch jedoch vergleichsweise viel Bauraum benötigt wird oder die Katalysatoren und/oder der Partikelfilter entsprechend kleinvolumig ausgeführt werden müssen, was eine häufige Regeneration erfordert und den Wirkungsgrad der Abgasreinigung aufgrund der kleinen Volumina begrenzt. Ferner sind aus dem Stand der Technik Abgasnachbehandlungssysteme mit einem motornahen Oxidationskatalysator und einem motornahen Partikelfilter bekannt. Zur weiteren Reduktion der Stickoxidemissionen ist bei Verbrennungsmotoren, welche mittels eines Abgasturboladers aufgeladen sind, eine Niederdruck-Abgasrückführung vorgesehen, welche stromabwärts der Turbine aus dem Abgaskanal abgezweigt und in den Ansaugtrakt stromaufwärts des Verdichters des Abgasturboladers mündet.

Dabei besteht ein Zielkonflikt aus einer möglichst motornahen Anordnung der Abgasnachbehandlungskomponenten und einer möglichst strömungsgünstigen Niederdruckabgasrückführung.

Aus der EP 2 304 991 A1 ist ein Verbrennungsmotor mit einem Abgasturbolader und einer Niederdruck-Abgasrückführung bekannt, bei dem die Abgasrückführung, Abgasreinigung, Bemessung und Kühlung des Abgases bei einem insgesamt minimalen Druckverlust und geringen Einzelkosten verbessert werden können.

Der Erfindung liegt nun die Aufgabe zugrunde, bei einem Verbrennungsmotor eine kompakte Abgasnachbehandlungseinrichtung mit einem Oxidationskatalysator und einem Partikelfilter bereitzustellen, bei der eine strömungsoptimierte Abgasrückführung möglich ist, und eine effiziente Abgaskühlung mit einem in der Abgasrückführung angeordneten Abgaskühler bei kompakter Bauweise möglich ist.

Die Aufgabe wird durch einen Verbrennungsmotor mit einem Motorblock, mit einer Einlassseite, welche mit einem Ansaugtrakt des Verbrennungsmotors verbunden ist, und mit einer Auslassseite, welche mit einem Abgassystem des Verbrennungsmotors verbunden ist, gelöst, wobei das Abgassystem einen motornahen ersten Katalysator und einen stromabwärts des ersten Katalysators ebenfalls motornah angeordneten Partikelfilter umfasst, wobei sich das Abgassystem stromabwärts eines Filterkörpers des Partikelfilters in einen Hauptkanal und eine Niederdruck-Abgasrückführung verzweigt, und wobei die Niederdruck-Abgasrückführung einen Niederdruck-Abgasrückführungs-Kühler aufweist, welcher an einer um 90° zur Auslassseite des Verbrennungsmotors versetzten Seite des Motorblocks angeordnet ist. Durch den erfindungsgemäßen Verbrennungsmotor mit der Niederdruck-Abgasrückführung und dem vom Auslass, insbesondere von einem Abgaskrümmer des Verbrennungsmotors beabstandeten Niederdruck-Abgasrückführungs-Kühler ist es möglich, die Rohemissionen des Verbrennungsmotors zu verbessern. Durch die im Vergleich zu den aus dem Stand der Technik bekannten Lösungen kurze und strömungsgünstig gestaltete Niederdruck-Abgasrückführung kann der Abgasgegendruck in dem Abgassystem reduziert werden, wodurch der Verbrauch des Verbrennungsmotors reduziert werden kann. Unter einer Niederdruck-Abgasrückführung ist in diesem Zusammenhang eine Abgasrückführung zu verstehen, welche Abgas aus dem Abgaskanal stromabwärts einer Turbine eines Abgasturboladers entnimmt und dieses Abgas dem Ansaugtrakt des Verbrennungsmotors stromaufwärts eines durch die Turbine des Abgasturboladers angetriebenen Verdichters zuführt. Dabei ist das Abgasnachbehandlungssystem des Verbrennungsmotors kompakt ausgeführt, sodass der Bauraumbedarf gering gehalten werden kann und der Verbrennungsmotor auch in vergleichsweise kleine Motorräume eingebaut werden kann. Unter einer motornahen Anordnung des ersten Katalysators und des Partikelfilters ist in diesem Zusammenhang eine Anordnung mit einer Abgaslauflänge von maximal 60 cm, vorzugsweise von maximal 40 cm, ab einem Auslass des Verbrennungsmotors zu verstehen.

Der Verbrennungsmotor ist vorzugsweise als selbstzündender Verbrennungsmotor nach dem Diesel-Prinzip ausgestaltet, wobei der erste Katalysator ein Oxidationskatalysator oder ein NOx-Speicherkatalysator ist und der Partikelfilter als Diesel-Partikelfilter (DPF) ausgestaltet ist. Alternativ kann der Verbrennungsmotor auch als fremdgezündeter Verbrennungsmotor nach dem Otto-Prinzip ausgeführt sein, wobei der erste Katalysator vorzugsweise als Drei-Wege-Katalysator und der Partikelfilter als Otto-Partikelfilter (OPF) ausgeführt ist.

Durch die in den abhängigen Ansprüchen aufgeführten Merkmale sind vorteilhafte Verbesserungen und Weiterentwicklungen des im unabhängigen Anspruch angegebenen Verbrennungsmotors möglich.

In bevorzugter Ausgestaltung der Erfindung ist vorgesehen, dass zwischen einer Verzweigung, an der die Niederdruck-Abgasrückführung aus dem Abgaskanal der Abgasanlage abzweigt, und dem Niederdruck-Abgasrückführungs-Kühler ein dem Abgasrückführungskanal der Niederdruck-Abgasrückführung zugeordnetes Entkopplungselement angeordnet ist. Durch ein Entkopplungselement können die Schwingungen und Vibrationen, welche von dem Verbrennungsmotor und dem Abgaskanal auf den Partikelfilter übertragen werden gedämpft werden, sodass diese Schwingungen und Vibrationen nur in begrenztem Ausmaß auf die Komponenten der Niederdruck-Abgasrückführung übertragen werden. Dabei ist das Entkopplungselement vorzugsweise in einem Übergangsbereich zwischen einem ersten Ausgang des Partikelfilters und der Abgasrückführungsleitung angeordnet und gewährleistet somit, dass die Bewegungen aus Dynamik und Thermomechanik aufgenommen werden und die Spannungen in den Komponenten der Niederdruck-Abgasrückführung reduziert werden.

In weiterer bevorzugter Ausgestaltung der Erfindung ist vorgesehen, dass der Abgasrückführungskanal einen Innendurchmesser von 20 mm - 50 mm aufweist. Durch einen Innendurchmesser von mehr als 20 mm und weniger als 50 mm kann der Strömungswiderstand in dem Abgasrückführungskanal reduziert werden und gleichzeitig der Bauraumbedarf für die Abgasrückführung in vertretbaren Grenzen gehalten werden. Durch einen größeren Querschnitt des Abgasrückführungskanals kann die Strömungsgeschwindigkeit in der Abgasrückführung reduziert werden, wodurch die Verweildauer des Abgases in der Abgasrückführung vergrößert wird und sich das Abgas auf dem Weg durch den Abgasrückführungskanal stärker abkühlen kann.

Besonders bevorzugt ist dabei, wenn der Abgasrückführungskanal einen Innendurchmesser von mindestens 40 mm aufweist. Durch einen Querschnitt des Abgasrückführungskanals mit einem Innendurchmesser von mindestens 40 mm kann der Strömungswiderstand soweit abgesenkt werden, dass der Staudruck im Abgaskanal nicht merklich ansteigt.

Gemäß einer vorteilhaften Weiterbildung des Verbrennungsmotors ist vorgesehen, dass der Abgasrückführungskanal von einer Verzweigung, an der die Niederdruck-Abgasrückführung aus dem Abgaskanal der Abgasanlage abzweigt und dem Niederdruck-Abgasrückführungs-Kühler eine Gaslauflänge von 450 mm bis 650 mm aufweist. Besonders bevorzugt ist dabei eine Gaslauflänge von 520 mm bis 550 mm. Eine Gaslauflänge von 450 mm bis 650 mm ist deutlich kürzer als die Gaslauflänge bei bekannten Niederdruck-Abgasrückführkanälen, welche eine ähnliche Kühlleistung für das zurückgeführte Abgas aufweisen. Durch die kurze Länge des Abgasrückführungskanals können sowohl der Bauraumbedarf als auch die Strömungsverluste reduziert werden, wodurch zum einen eine kompakte Ausführung des Abgasnachbehandlungssystems möglich ist und zum anderen der Abgasgegendruck in dem Abgassystem reduziert wird.

In einer weiteren, bevorzugten Ausgestaltung des Verbrennungsmotors ist vorgesehen, dass der Abgasrückführungskanal von einer Verzweigung, an der die Niederdruck-Abgasrückführung aus dem Abgaskanal der Abgasanlage abzweigt und dem Niederdruck-Abgasrückführungs-Kühler eine Biegung mit einem Biegungswinkel α von 180° bis 340° aufweist. Um das Abgas von dem Partikelfilter in Richtung des Niederdruck-Abgasrückführungs-Kühlers zu führen, ist eine entsprechende Umlenkung des zurückgeführten Abgasstroms notwendig. Durch einen Biegungswinkel von 180° bis 340°, vorzugsweise zwischen 260° und 290° kann der Abgasrückführungskanal in Form einer Schlaufe ausgeführt werden, wobei die Schlaufe einen vergleichsweise großen Biegungsradius aufweist, sodass die Strömungsverluste in der Niederdruck-Abgasrückführung begrenzt werden können.

In weiterer Verbesserung der Erfindung ist mit Vorteil vorgesehen, dass ein Gehäuse des Niederdruck-Abgasrückführungs-Kühlers mittels eines oder mehrerer Befestigungselemente, insbesondere mittels einer oder mehrerer Schrauben, an einer Stirnseite des Motorblocks fixiert ist. Der Motorblock des Verbrennungsmotors ist durch einen nicht dargestellten Kühlwasserkreislauf gekühlt und weist somit eine verglichen mit dem Abgaskrümmer niedrige Temperatur auf. Durch eine Befestigung des Gehäuses des Niederdruck-Abgasrückführungs-Kühlers an einer Stirnseite des Motorblocks, kann der Niederdruck-Abgasrückführungs-Kühler räumlich und thermisch von dem heißen Abgaskanal entkoppelt werden, sodass eine besonders effiziente Kühlung des zurückgeführten Abgases möglich ist. Zudem ermöglicht eine Anordnung des Niederdruck-Abgasrückführungs-Kühlers an der Stirnseite des Motorblocks eine relativ einfache Anbindung des Niederdruck-Abgasrückführungs-Kühlers an den Kühlmittelkreislauf des Verbrennungsmotors.

In einer vorteilhaften Weiterentwicklung des Verbrennungsmotors ist vorgesehen, dass an dem Partikelfilter stromabwärts des Filterkörpers ein erster Trichter ausgebildet ist, welcher sich in zwei weitere Trichter verzweigt. Durch einen Trichter stromabwärts des Filterkörpers des Partikelfilters kann der Strömungsquerschnitt verengt werden, wobei die Umlenkverluste begrenzt werden können. Insbesondere kann durch einen Trichter eine Ablösung der Abgasströmung von der Gehäusewand und eine damit verbundene Verwirbelung vermieden werden, welche den Strömungswiderstand und somit den Abgasgegendruck erhöht. Dabei teilt sich der Trichter im Bereich der Verzweigung in einen ersten weiteren Trichter und einen zweiten weiteren Trichter auf, wodurch strömungsgünstige Anschlussmöglichkeiten für einen Hauptkanal, welcher den Partikelfilter mit einem Endrohr des Abgassystems verbindet, und für die Niederdruck-Abgasrückführung geschaffen werden.

Bevorzugt ist dabei, wenn der erste weitere Trichter mit dem Abgasrückführungskanal und der zweite weitere Trichter mit dem Hauptkanal des Abgassystems verbunden ist. Dabei weist der erste weitere Trichter vorzugsweise einen kleineren Eingangsquerschnitt als der zweite weitere Trichter auf, da der Volumenstrom an Abgas durch den Hauptkanal in der Regel deutlich größer als der über die Niederdruck-Abgasrückführung zurückgeführte Volumenstrom von Abgas ist. Besonders bevorzugt ist dabei, wenn in dem ersten weiteren Trichter ein Filterelement angeordnet ist. Um ein Eindringen von Partikel und sonstigen Verbrennungsrückständen über die Niederdruck-Abgasrückführung auf das Verdichterrad des Abgasturboladers und in die Brennräume des Verbrennungsmotors zu vermeiden, und insbesondere auch eine Versottung der Niederdruck-Abgasrückführung zu vermeiden, ist an dem ersten weiteren Trichter ein Filterelement angeordnet, an dem sich feste und/oder flüssige Abgasbestandteile abscheiden können. Insbesondere ist hier ein Filterelement angeordnet, welches das Eindringen von Rußpartikeln in die Niederdruck-Abgasrückführung unterbindet und entsprechend feinporig ausgeführt ist.

Gemäß einer weiteren, vorteilhaften Verbesserung der Erfindung ist vorgesehen, dass der Katalysator und der Partikelfilter konzentrisch zueinander angeordnet sind. Um zum einen den Strömungswiderstand im Abgaskanal zu reduzieren und zum anderen eine möglichst kompakte Ausführungsform eines Abgasnachbehandlungssystems zu ermöglichen, ist es vorteilhaft, wenn der erste Katalysator, insbesondere ein Oxidationskatalysator oder ein NOx-Speicherkatalysator und der Partikelfilter konzentrisch zueinander angeordnet sind. Insbesondere ist auch vorgesehen, dass der Partikelfilter unmittelbar an den ersten Katalysator angeschlossen ist und somit beide Abgasnachbehandlungskomponenten möglichst motornah angeordnet werden können, um ein schnelles Aufheizen der Abgasnachbehandlungskomponenten nach einem Kaltstart des Verbrennungsmotors zu erreichen und/oder den zusätzlichen Wärmebedarf zum Aufheizen des Partikelfilters für eine Regeneration des Partikelfilters gering zu halten.

In einer bevorzugten Ausführungsform der Erfindung ist vorgesehen, dass der Abgaskanal des Abgassystems in dem Abschnitt zwischen dem Katalysator und dem Partikelfilter krümmungsfrei ausgebildet ist. Durch einen krümmungsfreien Abgaskanal können der Strömungswiderstand und die damit verbundenen Strömungsverluste zwischen dem Katalysator und dem Partikelfilter gering gehalten werden, sodass es zu keinem zusätzlichen Anstieg des Abgasgegendrucks kommt und sich in diesem Bereich keine Ablagerungen bilden, welche den Strömungsquerschnitt verkleinern und somit den Strömungswiderstand erhöhen.

Erfindungsgemäß wird ein Abgasnachbehandlungssystem für einen Verbrennungsmotor, umfassend einen motornahen ersten Katalysator und einen stromabwärts des ersten Katalysators ebenfalls motornah angeordneten Partikelfilter vorgeschlagen, wobei sich ein Abgaskanal des Abgassystems des Verbrennungsmotors stromabwärts eines Filterkörpers des Partikelfilters in einen Hauptkanal und eine Niederdruck-Abgasrückführung verzweigt, und wobei die Niederdruck-Abgasrückführung einen Niederdruck-Abgasrückführungs-Kühler aufweist, welcher an einer um 90° zur Auslassseite des Verbrennungsmotors versetzten Seite des Motorblocks angeordnet ist. Das erfindungsgemäße Abgasnachbehandlungssystem ermöglicht eine kompakte, strömungsgünstige Abgasnachbehandlung. Dabei können durch die Anordnung des Niederdruck-Abgasrückführungs-Kühlers und die damit verbesserte Kühlung des zurückgeführten Abgases insbesondere die NOx-Emissionen des Verbrennungsmotors reduziert werden.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: ein Ausführungsbeispiel eines erfindungsgemäßen Verbrennungsmotors mit einem erfindungsgemäßen Abgasnachbehandlungssystem in einer schematischen Darstellung; und
- Figur 2: ein Ausführungsbeispiel eines erfindungsgemäßen Verbrennungsmotors mit einem erfindungsgemäßen Abgasnachbehandlungssystem in einer 3D-Darstellung.

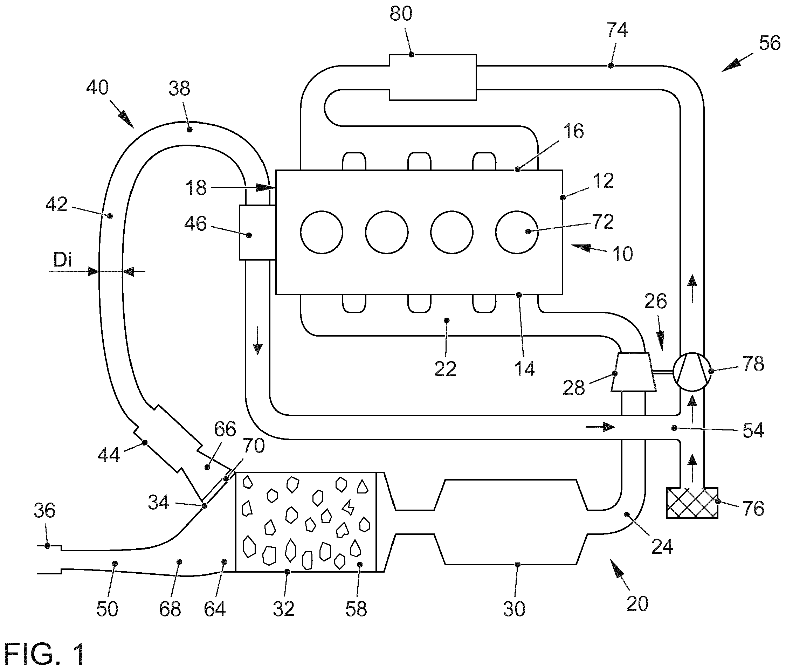

Figur 1 zeigt ein Ausführungsbeispiel eines erfindungsgemäßen Verbrennungsmotors 10. Der Verbrennungsmotor 10 weist einen Motorblock 12 auf, in dem mindestens ein Brennraum 72, vorzugsweise wie in Figur 1 dargestellt vier Brennräume 72, ausgebildet sind. Der Verbrennungsmotor 10 weist eine Einlassseite 16 auf, welche mit einem Ansaugtrakt 56 des Verbrennungsmotors 10 verbunden ist. Der Ansaugtrakt 56 umfasst eine Frischgasleitung 74, in welcher ein Luftfilter 76 und stromabwärts des Luftfilters 76 ein Verdichter 78 eines Abgasturboladers 26 angeordnet ist. Stromabwärts des Verdichters 78 und stromaufwärts der Brennräume 72 ist ein Ladeluftkühler 80 angeordnet, um die durch den Verdichter 78 komprimierte Frischluft abzukühlen und somit die Füllung der Brennräume 72 weiter zu verbessern. Der Verbrennungsmotor 10 weist ferner eine Auslassseite 14 auf, an welcher ein Abgaskrümmer 22 ausgebildet ist, welcher mit einem Abgassystem 20 des Verbrennungsmotors 10 verbunden ist. Das Abgassystem 20 weist einen motornahen ersten Katalysator 30, insbesondere einen Oxidationskatalysator, und einen stromabwärts des ersten Katalysators 30 ebenfalls motornah angeordneten Partikelfilter 32 auf. Unter einer motornahen Anordnung ist in diesem Zusammenhang eine Anordnung mit einer Abgaslauflänge von maximal 60 cm, vorzugsweise von maximal 40 cm, ab einem Auslass des Verbrennungsmotors 10 zu verstehen. An dem Partikelfilter 32 ist in Strömungsrichtung eines Abgases durch den Partikelfilter 32 stromabwärts des Filterkörpers 58 des Partikelfilters 32 eine Verzweigung 34 ausgebildet, an der sich ein Abgaskanal 24 des Abgassystems 20 in eine Niederdruck-Abgasrückführung 40 und einen Hauptkanal 50, welcher den Partikelfilter 32 mit einem Endrohr 36 des Abgassystems 20 verbindet, verzweigt. Die Niederdruck-Abgasrückführung 40 weist einen Niederdruck-Abgasrückführungs-Kühler 46 auf, welcher an einer um 90° zur Auslassseite 14 des Verbrennungsmotors 10 versetzten Seite des Verbrennungsmotors 10, insbesondere an einer Stirnseite 18 des Motorblocks 12, angeordnet ist. Im Abgassystem 20 ist stromabwärts eines Auslasses des Verbrennungsmotors 10 und stromaufwärts des ersten Katalysators 30 eine Turbine 28 des Abgasturboladers 26 angeordnet, welche den Verdichter 78 in dem Ansaugtrakt 56 antreibt.

Die Niederdruck-Abgasrückführung 40 weist einen Abgasrückführungskanal 42 auf, welcher den Abgaskanal 24 an der Verzweigung 34 stromabwärts des Partikelfilters 32 mit einer Einmündung 54 in den Ansaugtrakt 56 stromabwärts des Luftfilters 76 und stromaufwärts des Verdichters 78 verbindet. Unmittelbar an die Verzweigung anschließend kann in dem Abgasrückführungskanal 42 ein Entkopplungselement 44 angeordnet sein, um die aus der Anregung durch die Vibrationen des Verbrennungsmotors 10 auf den Partikelfilter 32 übertragenen Schwingungen von dem Abgasrückführungskanal 42 zu entkoppeln.

Der Abgasrückführungskanal 42 weist vorzugsweise einen im Wesentlichen konstanten Querschnitt mit einem Innendurchmesser Dᵢ von ca. 40 mm auf. Die Länge L des Abgasrückführungskanals 42 beträgt von der Verzweigung 34 bis zu dem Niederdruck-Abgasrückführungskühler 46 vorzugsweise ca. 530 mm, wobei der Abgasrückführungskanal 42 in diesem Abschnitt eine Biegung 38 mit einem Biegungswinkel α von ca. 280° aufweist. Der Niederdruck-Abgasrückführungs-Kühler 46 weist ein Gehäuse 62 auf, welches mittels Befestigungsmitteln 48, insbesondere mittels Bolzen 52 oder Schrauben 60, an einer Stirnseite 18 des Motorblocks 12 befestigt ist. Der Partikelfilter 32 weist stromabwärts des Filterkörpers 58 einen Trichter 64 auf, welcher sich in Strömungsrichtung in einen ersten weiteren Trichter 66 und einen zweiten weiteren Trichter 68 verzweigt. Der erste weitere Trichter 66 ist über das Entkopplungselement 44 mit dem Abgasrückführungskanal 42 verbunden. Zudem trägt der erste weitere Trichter 66 ein Filterelement 70, um das Eindringen von Rußpartikeln in die Niederdruck-Abgasrückführung 40 zu verhindern. Der zweite weitere Trichter 68 ist mit dem Hauptkanal 50 des Abgassystems 20 verbunden.

In einer alternativen Ausführungsform der Erfindung kann das Entkopplungselement 44 auch entfallen. Ferner sind Abgasrückführungskanäle 42 mit einer Lauflänge von 300 mm bis 900 mm, insbesondere von 450 mm bis 650 mm denkbar, um bei kompakter Bauweise eine effiziente und strömungsgünstige Abgasrückführung zu ermöglichen.

Durch die zunehmende Verschärfung der Abgasgesetzgebung, insbesondere in Bezug auf die Stickoxid-Emissionen, ist es notwendig, innermotorische Maßnahmen und Maßnahmen zur Abgasnachbehandlung zu verbinden. Eine Möglichkeit, die Rohemissionen des Verbrennungsmotors 10 zu verbessern, besteht darin, der Frischluft Abgas zuzumischen, um die Bildung von Stickoxid-Emissionen zu verringern. Dabei ist es vorteilhaft, wenn das zurückgeführte Abgas möglichst kühl ist. Aus diesem Grund ist in der Niederdruck-Abgasrückführung 40 ein Niederdruck-Abgasrückführungs-Kühler 46 angeordnet. Die Wirksamkeit dieses Kühlers 46 wird maßgeblich durch die Wärmeabstrahlung des Verbrennungsmotors 10 beeinflusst. Durch die erfindungsgemäße Lösung wird der Abgasrückführungskühler 46 von der heißen Auslassseite 14, insbesondere von dem Abgaskrümmer 22 räumlich getrennt, wodurch die Wirksamkeit des Niederdruck-Abgasrückführungs-Kühlers 46 verbessert wird oder bei gleicher Kühlleistung weniger Kühlmittel zirkulieren muss. Dadurch wird der Gesamtwirkungsgrad des Verbrennungsmotors 10 verbessert. Ferner kann der Strömungswiderstand in der Niederdruck-Abgasrückführung 40 durch den vergleichsweise großen Innendurchmesser Dᵢ und einen entsprechend großen Radius der Biegung 38 bei vergleichsweise kurze Länge L des Abgasrückführungskanal 42 gering gehalten werden. Durch das Entkopplungselement 44 können die Schwingungen und Bewegungen des Partikelfilters 32 von der Niederdruck-Abgasrückführung 40 entkoppelt werden, wobei die Bewegungen aus Dynamik und Thermomechanik gedämpft werden und damit die Spannungen aller beteiligten Bauteile 42, 46, 48 der Niederdruck-Abgasrückführung 40 gesenkt werden können.

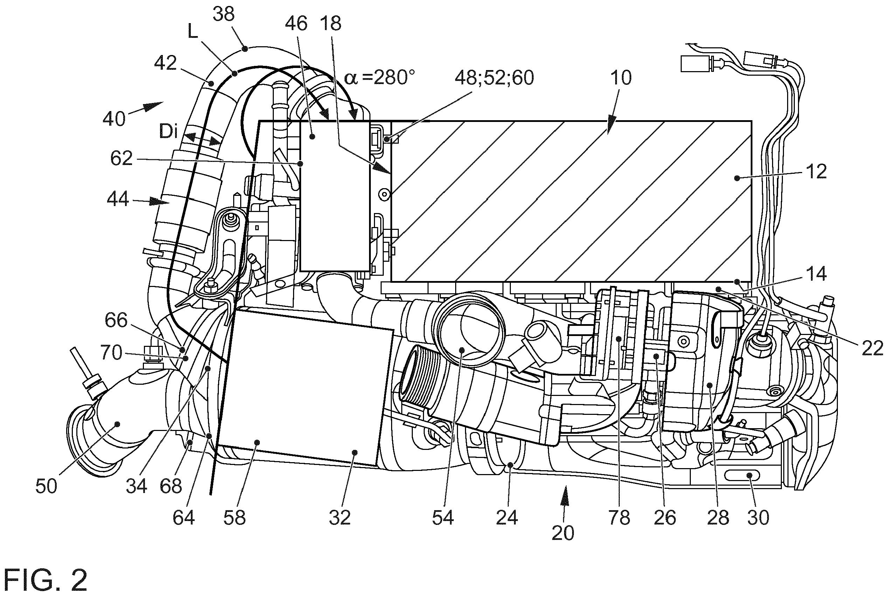

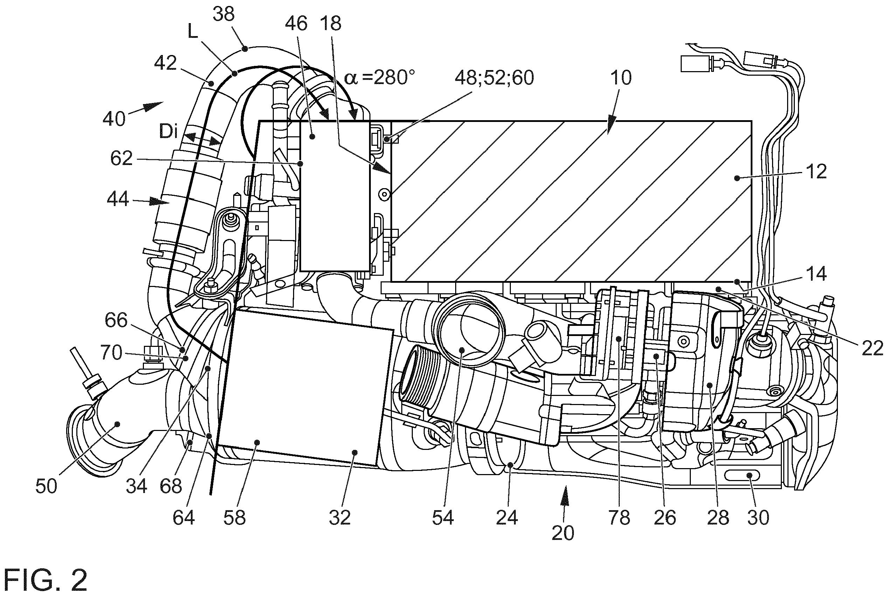

In Figur 2 ist der erfindungsgemäße Verbrennungsmotor 10 mit dem erfindungsgemäßen Abgasnachbehandlungssystem in einer dreidimensionalen Darstellung gezeigt. Durch das erfindungsgemäße Abgasnachbehandlungssystem kann ein minimaler Abgasgegendruck bei einer kompakten und platzsparenden Bauweise realisiert werden. Der Niederdruck-Abgasrückführungs-Kühler 46 wird durch das heiße Abgas auf der Auslassseite 14 nicht direkt angeströmt und somit weniger stark als vergleichbare Abgas-Rückführungs-Kühler 46 aufgeheizt. Dadurch kann auch die Länge L des Abgasrückführungskanals 42 kürzer ausgelegt werden, da das Abgas auf dieser Wegstrecke weniger stark abgekühlt werden muss.

### Bezugszeichenliste

- 10: Verbrennungsmotor
- 12: Motorblock
- 14: Auslassseite
- 16: Einlassseite
- 18: Stirnseite

- 20: Abgassystem
- 22: Abgaskrümmer
- 24: Abgaskanal
- 26: Turbolader
- 28: Turbine

- 30: Oxidationskatalysator
- 32: Partikelfilter
- 34: Verzweigung
- 36: Endrohr
- 38: Abgaskanal

- 40: Niederdruck-Abgasrückführung
- 42: Abgasrückführungskanal
- 44: Entkopplungselement
- 46: Niederdruck-Abgasrückführungs-Kühler
- 48: Befestigungsmittel

- 50: Hauptkanal
- 52: Bolzen
- 54: Einmündung
- 56: Ansaugtrakt
- 58: Filterkörper

- 60: Schrauben
- 62: Gehäuse
- 64: Trichter
- 66: erster Trichter
- 68: zweiter Trichter

- 70: Filterelement
- 72: Brennraum
- 74: Frischgasleitung
- 76: Luftfilter
- 78: Verdichter

- 80: Ladeluftkühler

- α: Biegungswinkel
- Dᵢ: Innendurchmesser der Niederdruck-Abgasrückführung
- L: Länge der Niederdruck-Abgasrückführung

## Patentansprüche

1. Verbrennungsmotor (10) mit einem Motorblock (12), mit einer Einlassseite (16), welche mit einem Ansaugtrakt (56) des Verbrennungsmotors (10) verbunden ist, und mit einer Auslassseite (14), welche mit einem Abgassystem (20) des Verbrennungsmotors (10) verbunden ist, wobei das Abgassystem (20) einen motornahen ersten Katalysator (30) und einen stromabwärts des ersten Katalysators (30) ebenfalls motornah angeordneten Partikelfilter (32) umfasst, und wobei sich das Abgassystem (20) stromabwärts eines Filterkörpers (58) des Partikelfilters (32) in einen Hauptkanal (50) und eine Niederdruck-Abgasrückführung (40) verzweigt, **dadurch gekennzeichnet, dass** die Niederdruck-Abgasrückführung (40) einen Niederdruck-Abgasrückführungs-Kühler (46) aufweist, welcher an einer um 90° zur Auslassseite (14) des Verbrennungsmotors (10) versetzten Seite des Motorblocks (12) angeordnet ist.

2. Verbrennungsmotor (10) nach Anspruch 1, **dadurch gekennzeichnet, dass** zwischen einer Verzweigung (34), an der die Niederdruck-Abgasrückführung (40) aus dem Abgaskanal (24) der Abgasanlage (20) abzweigt, und dem Niederdruck-Abgasrückführungs-Kühler (46) ein dem Abgasrückführungskanal (42) der Niederdruck-Abgasrückführung (40) zugeordnetes Entkopplungselement (44) angeordnet ist.

3. Verbrennungsmotor (10) nach Anspruch 1 oder 2, **dadurch gekennzeichnet, dass** der Abgasrückführungskanal (42) einen Innendurchmesser (Dᵢ) von 20 mm - 50 mm aufweist.

4. Verbrennungsmotor (10) nach Anspruch 3, **dadurch gekennzeichnet, dass** der Abgasrückführungskanal (42) einen Innendurchmesser (Dᵢ) von mindestens 40 mm aufweist.

5. Verbrennungsmotor (10) nach einem der Ansprüche 1 bis 4, **dadurch gekennzeichnet, dass** der Abgasrückführungskanal (42) von einer Verzweigung (34), an der die Niederdruck-Abgasrückführung (40) aus dem Abgaskanal (24) der Abgasanlage (20) abzweigt und dem Niederdruck-Abgasrückführungs-Kühler (46) eine Gaslauflänge (L) von 450 mm bis 650 mm aufweist.

6. Verbrennungsmotor (10) nach einem der Ansprüche 1 bis 5, **dadurch gekennzeichnet, dass** der Abgasrückführungskanal (42) von einer Verzweigung (34), an der die Niederdruck-Abgasrückführung (40) aus dem Abgaskanal (24) der Abgasanlage (20) abzweigt und dem Niederdruck-Abgasrückführungs-Kühler (46) eine Biegung (38) mit einem Biegungswinkel (a) von 180° bis 340° aufweist.

7. Verbrennungsmotor (10) nach einem der Ansprüche 1 bis 6, **dadurch gekennzeichnet, dass** ein Gehäuse (62) des Niederdruck-Abgasrückführungs-Kühlers (46) mittels eines oder mehrerer Befestigungsmittel (48) an einer Stirnseite (18) des Motorblocks (12) fixiert ist.

8. Verbrennungsmotor (10) nach einem der Ansprüche 1 bis 7, **dadurch gekennzeichnet, dass** an dem Partikelfilter (32) stromabwärts des Filterkörpers (58) ein erster Trichter (64) ausgebildet ist, welcher sich in zwei weitere Trichter (66, 68) verzweigt.

9. Verbrennungsmotor (10) nach Anspruch 8, **dadurch gekennzeichnet, dass** der eine weitere Trichter (66) mit dem Abgasrückführungskanal (42) und der zweite weitere Trichter (68) mit dem Hauptkanal (50) des Abgassystems (20) verbunden ist.

10. Verbrennungsmotor (10) nach Anspruch 9, **dadurch gekennzeichnet, dass** in dem ersten weiteren Trichter (66) ein Filterelement (70) angeordnet ist.

11. Verbrennungsmotor (10) nach einem der Ansprüche 1 bis 10, **dadurch gekennzeichnet, dass** der Katalysator (30) und der Partikelfilter (32) konzentrisch zueinander angeordnet sind.

12. Verbrennungsmotor (10) nach einem der Ansprüche 1 bis 11, **dadurch gekennzeichnet, dass** der Abgaskanal (24) in dem Abschnitt zwischen dem Katalysator (30) und dem Partikelfilter (32) krümmungsfrei ausgebildet ist.

13. Abgasnachbehandlungssystem für einen Verbrennungsmotor (10), umfassend einen motornahen ersten Katalysator (30) und einen stromabwärts des ersten Katalysators (30) ebenfalls motornah angeordneten Partikelfilter (32), wobei sich ein Abgaskanal (24) des Abgassystems (20) des Verbrennungsmotors (10) stromabwärts eines Filterkörpers (58) des Partikelfilters (32) in einen Hauptkanal (50) und eine Niederdruck-Abgasrückführung (40) verzweigt, **dadurch gekennzeichnet, dass** die Niederdruck-Abgasrückführung (40) einen Niederdruck-Abgasrückführungs-Kühler (46) aufweist, welcher an einer um 90° zur Auslassseite (14) des Verbrennungsmotors (10) versetzten Seite des Motorblocks (12) angeordnet ist.
